# EUROPÄISCHE PATENTSCHRIFT

(11) **EP 0 631 068 B1**
(45) Veröffentlichungstag und Bekanntmachung des Hinweises auf die Patenterteilung: **03.04.1996**
(21) Anmeldenummer: 94109155.5
(22) Anmeldetag: 15.06.1994
(51) Int. Cl.: F16H 1/16, F16H 57/02, B66C 23/84

(54) **Anordnung zum Drehantrieb eines Maschinen- und Anlagenteiles mit Schneckengetriebe**
Arrangement for the rotational drive of an element of a machine or of a subassembly with a work gearing
Agencement pour l'entraînement en rotation d'un élément d'une machine ou d'une installation avec un engrenage à vis sans fin

(30) Priorität: 19.06.1993 DE 4320376; 29.07.1993 DE 9311316 U; 13.08.1993 WO PCT/DE93/02156
(43) Veröffentlichungstag der Anmeldung: 28.12.1994
(73) Patentinhaber: IMO - INDUSTRIE-MOMENTENLAGER STOLL & RUSS GmbH, D-91350 Gremsdorf (DE)
(72) Erfinder: Stoll, Klaus, D-91315 Höchstadt/Aisch (DE); Russ, Erich, D-91350 Gremsdorf (DE)
(74) Vertreter: Matschkur, Götz, Lindner Patent- und Rechtsanwälte

(56) Entgegenhaltungen:
- EP-A- 0 031 873
- DE-A- 2 053 523
- DE-A- 2 325 713
- DE-A- 3 321 854
- DE-A- 3 446 438
- US-A- 3 067 627
- US-A- 3 710 640
- US-A- 4 616 528

## Beschreibung

Die Erfindung betrifft eine Anordnung zum Drehantrieb eines Maschinen- oder Anlagenteiles, beispielsweise Kranes, auf einem Chassis oder Fundament, unter Verwendung eines Schneckengetriebes, dessen Gehäuse auf dem Chassis oder Fundament befestigt ist, gemäß erstem Teil (Oberbegriff) des Anspruchs 1.

Bei bekannten Antrieben für Autokrane werden die Schwenkbewegungen beispielsweise mittels zweier Hydraulikzylinder hervorgerufen, die als Zahnstangen ausgebildet und links und rechts einer Königszapfenlagerung angeordnet sind. Die Drehkräfte werden über die Zahnstange auf ein großdimensioniertes Ritzel übertragen. Durch diese Anordnung der Hydraulikzylinderantriebe erhält das dabei verwendete Getriebe eine erhebliche Streckung, um hohe Kippmomente zu übertragen.

Bekannt ist eine Getriebeanordnung (vgl. DE-OS 34 46 438), bei der das Schneckenrad durch nur ein Kreuzrollenlager gelagert ist. Durch die einschnittige Lagerung entsteht ein Kippmoment durch den Antrieb (Schneckenrad, Schnecke). Dies wirkt sich ungünstig aus, weil dadurch Tragfähigkeit des einschnittigen Lagers verloren geht und keine so hohen äußeren Kräfte übertragen werden können. Desweiteren entsteht durch die einschnittige Lagerung eine höhere Verkippung des Schneckenrades, was sich sehr ungünstig auf die Eingriffsverhältnisse der Schneckenverzahnung auswirkt. Das einschnittige Lager ist durch eine Schraubverbindung vom Außenring mit dem Gehäuse, und vom Innenring mit dem Schneckenrad zu verbinden. Dies ist mit einem Mehraufwand von Fertigung und Montage verbunden.

Ferner sind Anordnungen mit Schneckengetriebe etwa der eingangs genannten Art bekannt (vgl. US-A-4 616 528, US-A-3 710 640, EP-A-0 031 873, DE-A-33 21 854), bei denen das Schneckenrad im Getriebe-Gehäuse zweifach bzw. zweischnittig ausgeführt ist. Zweischnittige Lagerung heißt, daß für das Schneckenrad zwei separate Lager, beispielsweise Wälzlager, koaxial zueinander angeordnet sind. Bei den Anordnungen aus den genannten Fundstellen dienen die Schneckengetriebe durchweg als Getriebestufe für Ventilanwendungen, Mehrfachantriebe insbesondere mit Gleichstrommotoren oder Spindelhubgetriebe und Spindelschubgetriebe. Gemeinsam ist diesen Ausführungen, daß gegen Einwirkungen außerordentlicher Kippmomente auf die Welle oder Achse des Schneckenrades keine besonderen Vorkehrungen getroffen sind. Die Gehäuse sind, soweit ersichtlich, durchweg einstückig ausgebildet und können aufgrund ihrer Struktur keinen Beitrag liefern, die Standfestigkeit und Stabilität der Achse oder Welle des Schneckenrades, die beispielsweise zu Abtrieb verwendet wird, zu gewährleisten oder gar zu erhöhen.

Es stellt sich die der Erfindung zugrundeliegende Aufgabe, eine Schneckengetriebeanordnung zum Drehantrieb zu schaffen, die sich einerseits durch eine kompakte, platzsparende Bauweise und andererseits durch die Fähigkeit auszeichnet, außerordentlich hohe externe Kräfte (Axial- und Radialkräfte) und Momente, vor allem Kippmomente aufzunehmen und zu übertragen. Zur Lösung wird auf die im Patentanspruch 1 gekennzeichnete Schneckengetriebeanordnung verwiesen.

Es wird also das Getriebe-Gehäuse in ein Ober- und Unterteil gegliedert, wobei eines der beiden Teile vom Anschlußansatz des Schneckenrades zum zu drehenden Maschinen- oder Anlagenteil durchsetzt ist. Indem die Außenringe der beiden Wälzlager je an einem Ober- und Unterteil des Gehäuses und die jeweiligen Innenringe am Schneckenrad befestigt sind, und nachfolgend Oberteil und Unterteil zum Gesamt-Gehäuse miteinander fest verschraubt werden, entsteht eine kompakte, platzsparende und feste Einheit, in der Getriebe und Lagerung baulich ineinander integriert sind. Insbesondere wird dadurch eine Verspannung und zusätzliche Stabilisierung der Wälzlager erreicht. So kann auf dem Schneckenrad das zu drehende Teil mit außerordentlichem Gewicht montiert werden, wobei nicht nur hohe Axial- und Radialkräfte, sondern auch hohe Kippmomente funktionssicher aufgenommen werden können.

Die erfindungsgemäß Antriebsanordnung eignet sich vor allem zum Direktantrieb von Maschinen- und Anlagenteilen. Sie kann bei verringertem baulichen Aufwand und erhöhter Zuverlässigkeit die bekannten Drehverbindungen und Ritzel mit Zwischengetriebe ersetzen. Indem die zweischnittige Lagerung des Schneckenrades erfindungsgemäß mit den miteinander verschraubten Gehäuseteilen zusammenwirkt, läßt sich bei einfacher Bauweise und großer Kosteneinsparung eine auch gegenüber Kippmomenten robuste Aufnahme des Schneckenrades im Getriebe-Gehäuse erreichen.

Durch das geschlossene Gehäuse ist die erfindungsgemäße Antriebsanordnung gegenüber Störeinflüssen aus der Umgebung weitgehend abgeschirmt, was die Wartungsfreiheit erhöht. An die Anschlußkonstruktion mit dem Verbindungsansatz brauchen keine so hohen Anforderungen an die baulichen Genauigkeiten gestellt werden, da die erfindungsgemäße Antriebsanordnung von Haus aus eine hohen Eigensteifigkeit besitzt. Dies ergibt sich unter anderem aus der erfindungsgemäßen Maßnahme, daß einerseits das Schneckenrad und andererseits Ober- und Unterteil (Basis- bzw. Deckelteil) des Getriebe-Gehäuses jeweils als Trägerkörper für die gehärteten Laufbahnschalen (Innen- und Außenringe) der zweischnittigen Lagerung verwendet werden. Zudem sind noch die beiden Gehäuseteile miteinander starr verbunden bzw. aneinander fixiert. Die Lager des Schneckenrades können als Vierpunktlager (Kugel), sowie als Rollenlager ausgeführt sein. Die Lagerkräfte lassen sich mittels weiterer Befestigungschrauben an Außenflanschen des Gehäuses oder dergleichen in die Umgebungskonstruktion übertragen. Aufgrund der erfindungsgemäßen Maßnahmen sind das Gehäuse und das Schneckenrad in der Lage, die von den schweren Maschinen- und Anlagenteilen herrührenden, hohen äußeren Kräfte, die über die Lagerung übertragen werden, aufzunehmen. Das Oberteil bzw. Deckelteil des Gehäuses kann beispielsweise die Funktion übernehmen, die äußeren Zugkräfte aufzunehmen. Ferner kann das Gehäuse die Lager spielfrei bzw. die Vorspannung halten.

Nach einer besonderen Ausführung sind die Gehäuseteile über Dichtmittel aneinandergelegt, um einen Abschluß gegen die Umwelt zu erreichen.

Dem erfindungsgemäßen Grundkonzept, die Lagerung des bei den ins Auge gefaßten Anwendungen hochbelasteten Schneckenrades räumlich gleichsam auseinander zu ziehen, entspricht einer Weiterbildung der Erfindung, nach der das Schneckenrad über zwei getrennte Schräg-Wälzlager drehgelagert ist, bei denen die Wälzkörper von den Einlagen bzw. vom Innen- und Außenring jeweils mit einem Umfangsabschnitt zwischen 60° und 120°, vorzugsweise etwa 90° umfaßt sind. Damit ist der an sich bekannte Weg (siehe oben), die Schneckenradlagerung mit einem einzigen Kreuzrollenlager auszuführen, verlassen. Über die beiden Schrägkugellager können Radial-, Axial-Lasten und Kippmomente vorteilhafter aufgenommen werden.

Zur Erzielung einer konstruktiv einfachen Ankopplung des zu drehenden Teiles an die Getriebeanordnung wird nach einer anderen Weiterbildung der Erfindung vorgeschlagen, daß wenigstens eine Stirnseite oder sonstige, nicht verzahnte Seitenwandung des Schneckenrades zum Anschluß des zu drehenden Teiles spezifisch ausgebildet ist, sei es durch einen Kranz von Bohrungen zum Anschrauben, sei es durch beispielsweise hakenförmige Einrastelemente oder Einschnappeinrichtungen. Auch eine einstückige Verbindung zwischen Schneckenrad und zu drehendem Teil ist im Rahmen der Erfindung denkbar.

Die Herstellungskosten erniedrigt es, wenn nach anderer Weiterbildung der Erfindung die Einlage bzw. Innen- und Außenring der Wälzlager radial durchgehend geschlitzt sind. Damit wird nicht nur die Möglichkeit geschaffen, die Einlagen aus einem einzigen Strang kostengünstig herzustellen, sondern auch diese beim Einbau bzw. der Montage kurzzeitig aufspreizen zu können.

Bei Verwendung von Wälzlagern ist zweckmäßig der Außenring an der Innenwandung des Getriebe-Gehäuses und der Innenring am zu drehenden Schneckenrad fixiert. Die Wälzlager werden durch den Getriebedeckel zu einer Einheit verbunden.

Damit möglichst hohe Drehmomente übertragen werden können, sind nach einer anderen Ausbildung der Erfindung zwei oder mehr Schnecken angeordnet, die auf das (gemeinsame) Schneckenrad einwirken.

Bei extremer Belastung kann es im Rahmen der Erfindung auch zweckmäßig sein, Wälzlager mit mehreren Wälzkörperkränzen auszuführen, die an Laufbahnen abrollen, die unter Winkel zueinander stehen. Dabei kann beispielsweise ein Wälzkörperkranz ausschließlich für die Übertragung von Radialkräften und je ein weiterer Wälzkörperkranz für die Übertragung von Axialkräften in beiden Richtungen von Momenten vorgesehen werden. Der erste Wälzkörpersatz würde auf zylindrischen Laufbahnen abrollen, während die beiden anderen Wälzkörperkränze an dazu rechtwinkligen ebenen Flächen abrollen. Solche Lagermodule sind für sich genommen als Doppel-Axial-Radial-Lager bekannt.

Bei bekannten Schneckengetrieben, insbesondere wenn sie nicht als reines Übersetzungsgetriebe, sondern im Sinne der erfindungsgemäßen Gattung zum Direktantrieb von Maschinen- und Anlagenteilen eingesetzt sind (vgl. DE-OS 34 46 438), kann leicht folgendes Problem auftreten: Das sich in Drehung befindliche Schneckenrad muß irgendwann in möglichst kurzer Zeit abgebremst werden. Da sich mit dem drehenden Schneckenrad bei den genannten Anwendungsfällen in der Regel sehr viel Masse mitbewegt, ist im großen Umfang Bewegungsenergie umzuwandeln. Infolgedessen kann es beim schnellen Abbremsen passieren, daß die Verzahnung des Schneckenrades oder das damit in Eingriff stehende Gewinde der Schnecke bricht.

Mithin wird im Rahmen der Erfindung das weitere Problem aufgeworfen, beim Anfahren und insbesondere Abbremsen der mit einem Maschinenteil gekoppelten Schneckenräder auftretende dynamische Kräfte aufzufangen und so zu kompensieren, daß eine Zerstörung des Getriebeeingriffs zwischen Schnecke und Schneckenrad verhindert ist. Zur Lösung wird bei einer Schneckengetriebeanordnung mit den eingangs genannten Merkmalen erfindungsgemäß vorgeschlagen, daß die Schnecke nicht nur drehgelagert, sondern auch in ihrer Längsrichtung gegen Federkraft (linear) verschiebbar gelagert ist. Mit anderen Worten, es sind ein oder mehrere Federelemente so angeordnet, daß sie mit ihrer Federkraft der Linearverschiebung der Schnecke innerhalb des Getriebegehäuses entgegen stehen. Dies kann zweckmäßig dadurch realisiert sein, daß das oder die Federelemente einerseits gegenüber der Gehäusewandung und andererseits an der Schnecke abgestützt sind bzw. angreifen. Mit dieser erfindungsgemäßen Ausbildung können Massenkräfte der in Drehung befindlichen Teile kompensiert werden, ohne daß es zu Schäden an der Verzahnung durch Überlast kommt. Ein schlagartiges Abbremsen ist vermieden.

Mit Vorteil sind nach einem oder beiden Enden des Schnecken-Gewindes Federeinrichtungen, beispielsweise ein oder mehrere Schrauben- oder aneinanderliegende Tellerfedern, im Paket zusammengefaßt, die jeweils zwischen einem Gewinde-Stirnende und dem Schnecken-Wellenende angreifen bei Abstützung gegen die Gehäusewandung.

Mit der erfindungsgemäßen Federung wird der Schnecke ein gewisser Hub innerhalb des Gehäuses oder Rahmens erlaubt wodurch Bremskräfte und Verzögerungsbelastungen ausgeglichen bzw. kompensiert werden können.

Mit Vorteil ist die Schnecke beidseits an ihren Enden jeweils mit einem Radial- und Axiallager gelagert, weil dadurch die äußeren Massenkräfte oder Stöße abgemildert und vorgespannte Tellerfedern zwischen den Axiallagern und der Schnecke angeordnet sein können.

Unter dem Ziel, die Robustheit gegenüber Kippmomenten zu verstärken, besteht eine zweckmäßige Ausführung darin, daß Deckel- und Basisteil des Gehäuses in Richtung der Schneckenradachse oder parallel dazu aufeinandergesetzt sind. Die aneinanderliegenden Auflageflächen der beiden Gehäuseteile erhöhen die Standfestigkeit und verhindern dann deren Verkippen gegeneinander, wobei auch ein stabiler Halt für die Außenringe der zweischnittigen Schneckenrad-Lagerung gewährleistet ist. Vorteilhaft sind die gemeinsamen Auflageflächen der Gehäuseteile so dimensioniert, daß sie von Fixier-, insbesondere Schraubmittel durchsetzbar sind. Dem Verkippen wirkt es weiter entgegen, wenn die Fixier- oder Schraubmittel parallel zur Schneckenrad-Achse verlaufen, wobei die gemeinsamen Auflageflächen der Gehäuseteile mit maximaler Kraft aneinandergepreßt sind. Dadurch wird die Stabilität der Lagerung optimiert.

Es liegt im Rahmen der Erfindung, daß der Verbindungsansatz des Schneckenrades den Deckel- oder Basisteil bzw. eines der beiden Gehäuseteile axial oder achsparallel durchsetzt. Dadurch läßt sich der Verbindungsansatz besonders leicht zur Aufnahme und zum Tragen des zu drehenden Maschinen- oder Anlagenteiles einsetzen.

Die erfindungsgemäße Schneckengetriebe-Drehantriebsanordnung läßt sich insbesondere bei Auto-, Bau-, Hafen-, Industriekränen, Baggern, Hubsichtbühnen, Tieflöffelbaggern, Betonmischern, Gabelstapler-Anbaugeräten, Schweißdrehtischen und Betonpumpen zur Bildung der dort jeweils notwendigen Drehverbindungen verwenden. Weitere Anwendungsgebiete für die erfindungsgemäße Antriebsanordnung sind Schwenkeinrichtungen für Greifer, Schienenzangen, Arbeitslastwendemaschinen, Anbaumanipulatoren, schwenkbare Stapleranbaugeräte, Autoparksysteme, schwenkbare Hubbühnen, Fahrzeugwinden und Wandwinden, Lenkschemel für Schwerlastfahrzeuge, Lenk-Antriebseinheit für Lkw, Maschinen zum Verpacken und Füllen, Etikettieren, Sortieren, Misch- und Rührwerke, Eindickeranlagen und Rechenanlagen für Abwasser- und Schlammbehandlung, Baumaschinen, Schwenklager, Baggerlader, Universal-Bagger, Roboter, Zuführungsmaschinen, Rundschaltische und Wendespanner.

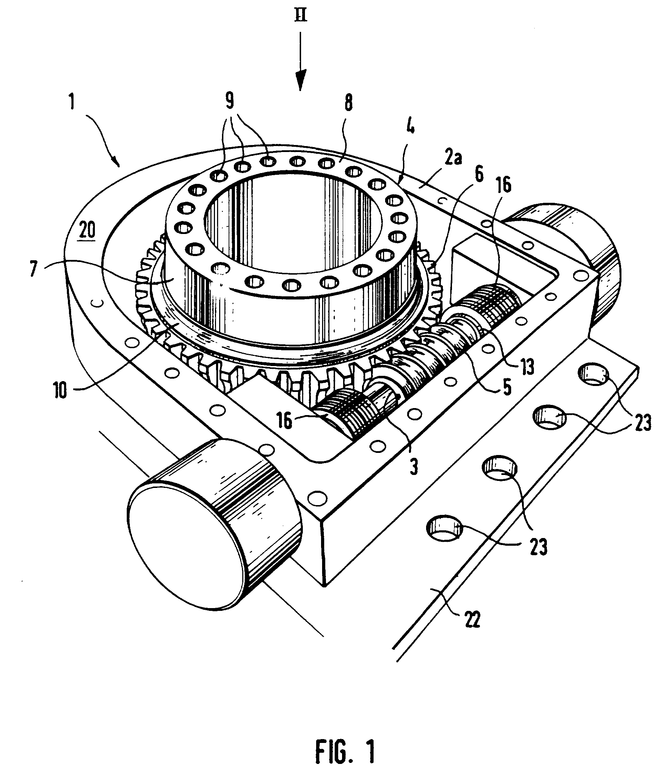

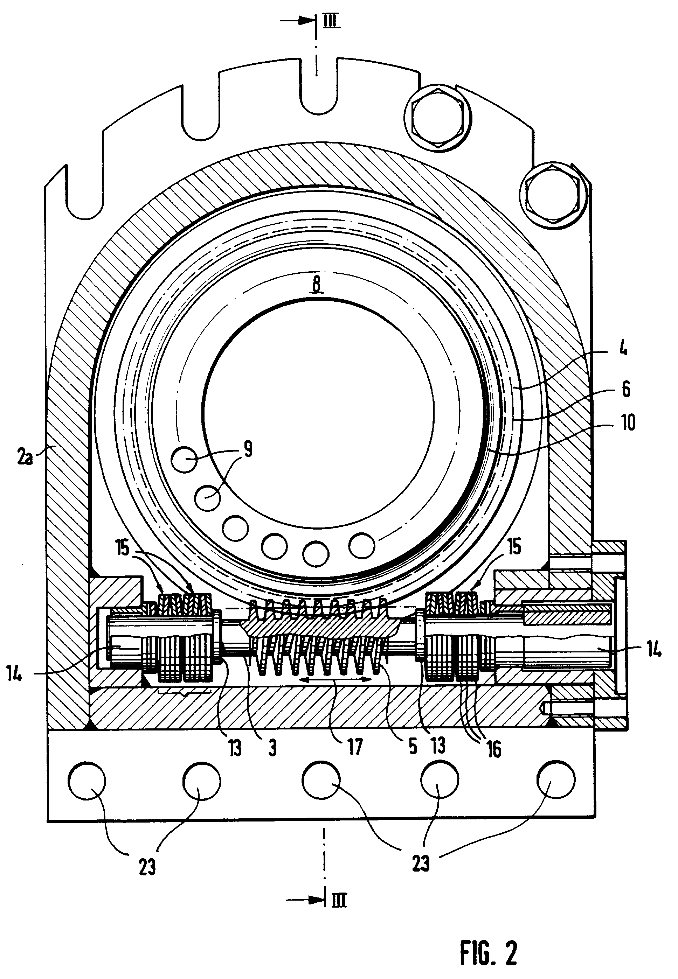

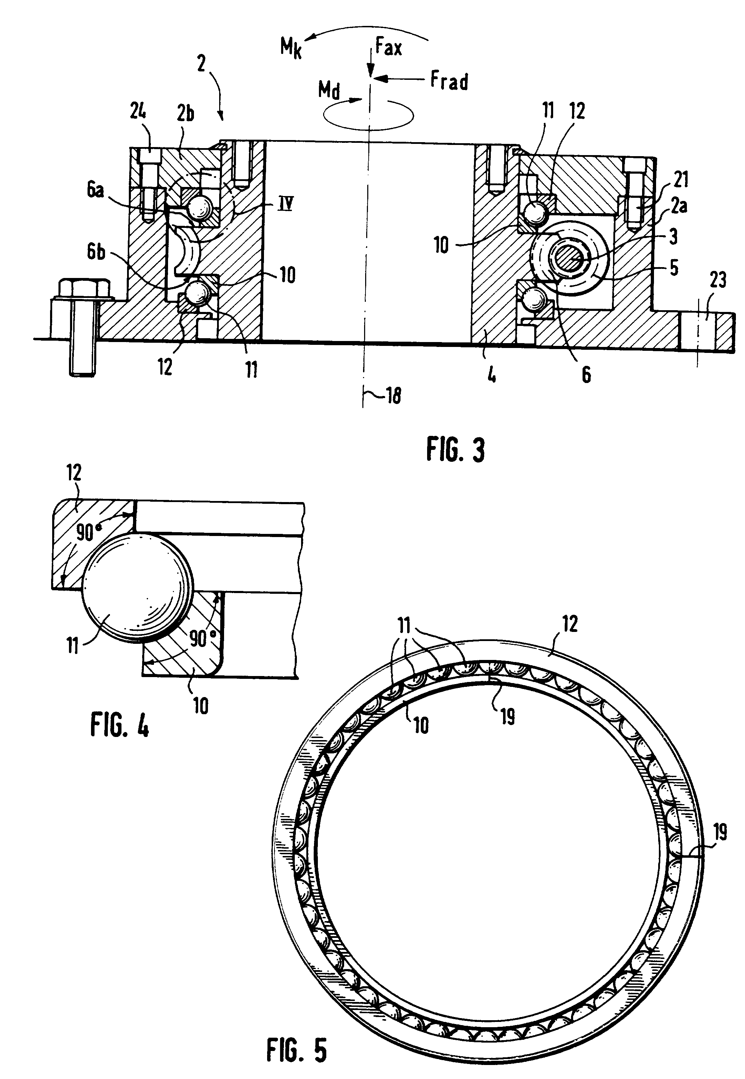

Weitere Einzelheiten, Merkmale und Vorteile auf der Basis der Erfindung ergeben sich aus den Unteranspüchen sowie der nachfolgenden Beschreibung eines bevorzugten Ausführungsbeispiels der Erfindung anhand der Zeichnungen. Diese zeigen in:
- Fig: 1: eine Antriebsanordnung mit Schneckengetriebe in perspektivischer Darstellung,
- Fig: 2: eine Draufsicht gemäß Richtung II in Figur 1,
- Fig: 3: einen Schnitt gemäß der Linie III - III in Figur 2
- Fig: 4: eine vergrößerte Darstellung des Details IV in Figur 3, und
- Fig: 5: das in der Anordnung gemäß Figuren 1 - 4 verwendete Kugellager in axialer Draufsicht.

Gemäß Figur 1 weist das für die erfindungsgemäße Drehantriebsanordnung verwendete Schneckengetriebe 1 ein Getriebe-Gehäuse 2 (vgl. Fig. 3) mit einem Basisteil 2a auf, in dem eine Schnecke 3 und ein Schneckenrad 4 drehbar gelagert sind. Das Basisteil 2a besitzt eine Auflagefläche 20, die von einer Reihe Innengewindebohrungen 21 achsparallel zum Schneckenrad 4 durchsetzt sind. An der geraden Vorderseite des im Beispiel weitgehend gebogenen Basisteiles 2a ist ein vorspringender Befestigungsflansch 22 ausgebildet, über dessen Befestigungslöcher 23 eine Fixierung an einem Fundament oder Chassis (nicht gezeichnet) herbeigeführt werden kann. Die Schnecke 3, die über ihr schraubenförmiges Gewinde 5 mit der Verzahnung 6 des Schneckenrades 4 in Eingriff steht, ist zur Kopplung mit einem (nicht gezeichneten) Dreh-Antriebsmotor vorgesehen.

Das Schneckenrad 4 besitzt an seiner Stirnseite einen achsparallel bzw. zylindrisch vorspringenden Verbindungsansatz 7, in dessen Stirnwandung 8 eine Mehrzahl von Befestigungselementen, z.B. Anschraubbohrungen 9 reihum in Umfangsrichtung bzw. kranzartig eingeformt sind. Diese dienen zur Befestigung eines zu drehenden Maschinen- oder Anlagenteiles (nicht gezeichnet). Auf der Stirnseite der Schneckenrad-Verzahnung 6 aufliegend ist der kleinere Innenring 10 eines Schrägkugellagers (vgl. Figur 4) in Figur 1 sichtbar. Durch Einlegen einer Vielzahl von Kugeln 11 (vgl. Figuren 3 und 4) in diesen Innenring 10 und Aufsetzen eines (größeren) Außenrings 12 läßt sich das vollständige Schrägkugellager 10, 11, 12 bilden.

Wie aus Figur 1 und vor allem Figur 2 erkennbar, ist im Abstand von den beiden Stirnenden des Schnecken-Gewindes 5 jeweils eine um die Schneckenwelle herum ringartig vorspringende Anschlagschulter 13 erhaben ausgebildet. Zwischen jeder dieser Anschlagschultern 13 und den in der Wandung des Gehäuses 6 drehgelagerten Schnecken-Endabschnitten 14 sind ein oder mehrere Pakete 15 aus einer Mehrzahl einzelnder Tellerfedern 16 insbesondere unter Einspannung angeordnet.

Die Tellerfedern 16 bzw. die entsprechenden Pakete 15 sind über ihre inneren Ausnehmungen auf die Schnecke 3 beidseits des Schneckengewindes 5 aufgesteckt bis zur Anlage an der jeweiligen Anschlagschulter 13.

Die Tellerfedern 16 sind als kreisringförmige Plättchen ausgebildet, die gemäß teilweiser Querschnittsdarstellung in Figur 2 zum äußeren Rand hin zunehmend von ihrer ebenen, zweidimensionalen Kreisring-Grundfläche unter einem schrägen Winkel abweichen. Innerhalb eines Federpakets 15 sind mindestens zwei solcher Tellerfedern 16 zueinander spiegelsymmetrisch so aneinander gelegt, daß sich lediglich ihre äußeren Randkanten berühren, die von der besagten ebenen Kreisring-Grundfläche am meisten abstehen. Diese Abweichung wird bei axialer Kraftbeaufschlagung, beispielsweise aufgrund kurzzeitigen Verzögern oder Beschleunigens des Schneckenrads 4, elastisch-reversibel vermindert. Daraus ergibt sich die Möglichkeit linearer Hubbewegungen 17 für die Schnecke 3 im Getriebe-Gehäuse 2. Über diese Hubbewegungen 17 der Schnecke 3 können bei starken Beschleunigungen oder Verzögerungen des Schneckenrads 2, beispielsweise beim Ahbremsen oder Anfahren, auftretende dynamische Kräfte von den beidseitigen Federpaketen 15 aufgenommen werden, so daß ein apruptes Abbremsen von Lasten ohne Zerstörung der Verzahnung 6 und/oder des Gewindes 5 möglich ist.

Gemäß Figur 3 ist zur Bildung des Gesamtgehäuses 2 auf die Auflagefläche 20 (vgl. Fig. 1) des unteren Basisteiles 2a ein (oberes) Deckelteil 2b flächig aufzusetzen. Zur starren Fixierung aneinander dienen Verbindungsschrauben 24, welche in die Innengewindebohrungen 21 des Basisteiles 2a eingeschraubt sind und den Deckelteil 2b über fluchtende Durchgangsbohrungen hintergreifen. Das Schneckenrad 4 ist gegenüber dem Getriebe-Gehäuse 2 durch zwei Kugellagersätze 10, 11, 12 drehbar gelagert, die jeweils auf einer der beiden Stirnseiten 6a, 6b der Schneckenrad-Verzahnung 6 aufgelegt sind. Dabei ist stets der kleinere Innenring 10 an der jeweiligen Stirnseite 6a bzw. 6b der Schneckenrad-Verzahnung 6, und der größere Außenring 11 an der Innenwandung des Gehäuses 2 ortsfest fixiert. Indem also die Lagerung des Schneckenrades 4 durch die Aufteilung der Lagerung in je einen separaten Kugellagersatz 10, 11, 12 für die Stirnseiten 6a, 6b an der Schneckenrad-Verzahnung räumlich auseinandergezogen ist, können Radiallasten F_{rad}, Axiallasten Fₐₓ und Kippmomente Mₖ in außerordentlichem Umfang aufgenommen werden, wobei das für das anzutreibende Teil notwendige Drehmoment M_{d} des Schneckenrades 4 um dessen Mittelachse 18 weitgehend unbeeinträchtigt bleibt.

Diese vorteilhafte Wirkung der zweifachen Lagerung läßt sich noch fördern durch die Verwendung von Schrägkugellagern gemäß Figur 4: Die Einlagen bzw. Innen- und Außenringe 10, 12 umfassen die Lagerkugel 11 jeweils nur mit einem Umfangsabschnitt von etwa 90°. Sind diese gemäß Figur 3 koaxial bzw. achsparallel zur Mittelachse 18 fluchtend angeordnet, kann ein Kippmoment Mₖ durch zwei zusammenwirkende Lager 10, 11, 12 an je einer Schneckenrad-Stirnseite 6a, 6b mit größerer Funktionssicherheit aufgenommen werden.

In Figur 5 ist ein vollständiger Schräg-Kugellagersatz 10, 11, 12 in der Draufsicht dargestellt. Dabei sind radial vorgenommene Schlitze 19 ersichtlich, die jede der Einlagen bzw. kleineren und größeren Ringe 10 bzw. 12 durchsetzen.

## Patentansprüche

1. Anordnung zum Drehantrieb eines Maschinen- oder Anlagen-Teiles, beispielsweise Kranes, auf einem Chassis oder Fundament, mit einem Schneckengetriebe (1), dessen Gehäuse (2) auf dem Chassis oder Fundament befestigt ist, dessen Schnecke (3) manuell oder von einem Antriebsmotor in Drehung versetzbar ist, und dessen Schneckenrad (4) im Gehäuse (2) drehbar gelagert ist, indem das Schneckenrad (4) an beiden Seiten (6a,6b) seiner zum Eingriff mit der Schnecke (3) vorgesehenen Verzahnung (6) je mit einem separaten Wälzlager (10,11,12) versehen ist, **dadurch gekennzeichnet**, daß das Gehäuse (2) mit einem Basisteil (2a) und einem darauf flächig fixierbaren Deckelteil (2b) gebildet ist, daß wenigstens eine Stirnseite (6a,6b) oder nicht verzahnte Seitenwandung des Schneckenrades (4) einen Verbindungsansatz (7) aufweist, der den Basis- oder Deckelteil durchsetzt und zum Anschluß an das zu drehende Teil ausgebildet ist, und daß die beiden Außenringe (12) der Wälzlager an der jeweiligen Wandung der Basis- und Deckelteile (2a,2b) des Gehäuses (2) sowie die beiden zugehörigen Innenringe (10) jeweils an der Wandung des Schneckenrades (4) anliegen und/oder fixiert sind.

2. Anordnung nach Anspruch 1, dadurch gekennzeichnet, daß die Lagerung des Schneckenrades (4) mittels zweier Schräg-Wälzlager (Fig.4) realisiert ist, bei denen die Wälzkörper (11) von den Einlagen beziehungsweise vom Innen- und Außenring (10,12) jeweils mit einem Umfangsabschnitt zwischen 60 und 120 Grad, vorzugsweise von 90 Grad, umfaßt sind.

3. Anordnung nach einem der vorangehenden Ansprüche, dadurch gekennzeichnet, daß zur Lagerung des Schneckenrades (4) zwei Wälzlager (10,11,12) angeordnet sind, deren Einlagen beziehungsweise Innen- und Außenringe (10,12) geschlitzt (19) sind.

4. Anordnung nach einem der vorangehenden Ansprüche, dadurch gekennzeichnet, daß zur Lagerung des Schneckenrades (4) zwei Wälzlager (10,11,12) angeordnet sind, bei denen der Innenring (10) einen gegenüber dem Außenring (12) unterschiedlichen, insbesondere kleineren Durchmesser als der Außenring (12), aufweist.

5. Anordnung nach einem der vorangehenden Ansprüche, dadurch gekennzeichnet, daß das Basis- und/oder Deckelteil des Getriebe-Gehäuses (2) und/oder das Schneckenrad (4) jeweils eine Aussparung aufweisen, in die der Außenring (12) eingelegt ist.

6. Anordnung nach einem der vorangehenden Ansprüche, gekennzeichnet durch zwei oder mehr antreibbare Schnecken, die mit dem gemeinsamen Schneckenrad in Eingriff stehen.

7. Anordnung nach einem der vorangehenden Ansprüche, gekennzeichnet durch Wälzlager mit mehreren Wälzkörperkränzen, denen vorzugsweise Laufbahnen zum Abrollen zugeordnet sind, die miteinander einen vorbestimmten Winkel bilden.

8. Anordnung nach Anspruch 7, dadurch gekennzeichnet, daß die Wälzlager mit mehreren Wälzkörperkränzen als an sich bekannte Doppel-Axial-Radiallager ausgeführt sind.

9. Anordnung nach einem der vorangehenden Ansprüche, mit einer länglichen Schnecke (3) und einem damit in Eingriff stehenden Schneckenrad (4), die in einem gemeinsamen Getriebegehäuse (2) oder -rahmen jeweils drehbar gelagert sind, dadurch gekennzeichnet, daß die Schnecke (3) zudem in ihrer Längsrichtung gegen Federkraft verschiebbar (17) gelagert ist.

10. Anordnung nach Anspruch 9, dadurch gekennzeichnet, daß die der Verschiebung (17) entgegenstehende Federkraft mit einem oder mehreren Federelementen (15,16) realisiert ist, die gegenüber der Gehäusewandung (2) abgestützt sind und an der Schnecke (3) angreifen (13).

11. Anordnung nach Anspruch 9 oder 10, dadurch gekennzeichnet, daß die der Verschiebung entgegenstehende Federkraft mit einem oder mehreren Federelementen (15,16) realisiert ist, die an der Schnecke (3) zwischen einem Stirnende ihres Gewindes (5) und ihrem jeweils nächstliegenden drehgelagerten Endabschnitt (14) angreifen (13) und gegenüber der Gehäusewandung (2) des Getriebes (1) abgestützt sind.

12. Anordnung nach Anspruch 10 oder 11, dadurch gekennzeichnet, daß ein oder mehrere Federelemente (15,16) als von der Schnecke durchsetzte Schrauben- oder Tellerfedern (16) ausgeführt sind, die gegebenenfalls als gemeinsam spannbare Federpakete zusammengefaßt sind.

13. Anordnung nach einem der vorangehenden Ansprüche, dadurch gekennzeichnet, daß Deckel- und Basisteil (2a,2b) des Gehäuses (2) in Richtung der Schneckenrad-Achse (18) oder parallel zur Schneckenrad-Achse (18) aufeinandersetzbar und/oder miteinander verschraubbar sind.

14. Anordnung nach einem der vorangehenden Ansprüche, dadurch gekennzeichnet, daß die gemeinsamen Auflageflächen (20) von Basis- und Deckelteil (2a,2b) des Gehäuses (2) von Fixier-, insbesondere Schraubmitteln (21,24) durchsetzt sind.

15. Anordnung nach Anspruch 14, dadurch gekennzeichnet, daß die Fixier- oder Schraubmittel (21,24) parallel zur Schneckenrad-Achse (18) verlaufen.

16. Anordnung nach einem der vorangehenden Ansprüche, dadurch gekennzeichnet, daß der Verbindungsansatz (7) den Deckel- und Basisteil (2a,2b) axial oder achsparallel durchsetzt.

17. Anordnung nach einem der vorangehenden Ansprüche, dadurch gekennzeichnet, daß die Schnecke (3) an beiden Enden jeweils mit einem Axial- und Radiallager versehen ist.

18. Anordnung nach einem der vorangehenden Ansprüche, dadurch gekennzeichnet, daß der Verbindungsansatz (7) zur Aufnahme und zum Tragen des Maschinen- und Anlagenteiles verwendet wird.

## Claims

1. Arrangement for the rotary operation of a machine or plant part, e.g. a crane, on a chassis or bed, having a worm gear (1), of which the housing (2) is fastened on the chassis or bed, the worm (3) may be set in rotation manually or by a drive motor and the worm wheel (4) is rotatably supported in the housing (2) in that the worm wheel (4) on each of the two sides (6a, 6b) of its gearing (6) provided for meshing with the worm (3) is provided with a separate rolling bearing (10, 11, 12), characterized in that the housing (2) is formed by a base part (2a) and a top part (2b) fixable flat onto said base part, that at least one face (6a, 6b) or non-geared side wall of the worm wheel (4) has a connecting projection (7), which penetrates the base or top part and is designed for connection to the part to be rotated, and that the two outer rings (12) of the rolling bearings rest against and/or are fixed to the respective wall of the base and top parts (2a, 2b) of the housing (2) and the two associated inner rings (10) each rest against and/or are fixed to the wall of the worm wheel (4).

2. Arrangement according to claim 1, characterized in that the mounting of the worm wheel (4) is realized by means of two skew rolling bearings (Fig.4), in which a peripheral section of between 60 and 120°, preferably 90°, of the rolling bodies (11) is enclosed in each case by the liners and by the inner and outer ring (10, 12).

3. Arrangement according to one of the preceding claims, characterized in that, for mounting the worm wheel (4), two rolling bearings (10, 11, 12) are disposed, the liners or inner and outer rings (10, 12) of which are slit (19).

4. Arrangement according to one of the preceding claims, characterized in that, for mounting the worm wheel (4), two rolling bearings (10, 11, 12) are disposed, in which the inner ring (10) has a diameter which is different from, in particular smaller than, the outer ring (12).

5. Arrangement according to one of the preceding claims, characterized in that the base and/or top part of the gear housing (2) and/or the worm wheel (4) each have a recess, into which the outer ring (12) is inserted.

6. Arrangement according to one of the preceding claims, characterized by two or more drivable worms which are meshed with the common worm wheel.

7. Arrangement according to one of the preceding claims, characterized by rolling bearings having a plurality of rolling body rims, associated with which are preferably rolling tracks which lie at a predetermined angle relative to one another.

8. Arrangement according to claim 7, characterized in that the rolling bearings having a plurality of rolling body rims take the form of known combined radial and thrust bearings.

9. Arrangement according to one of the preceding claims, having an elongated worm (3) and a worm wheel (4) meshed therewith, which are in each case rotatably supported in a common gear housing (2) or frame, characterized in that the worm (3) is additionally supported so as to be displaceable (17) in its longitudinal direction counter to spring force.

10. Arrangement according to claim 9, characterized in that the spring force opposing the displacement (17) is realized by one or more spring elements (15, 16), which are supported relative to the housing wall (2) and act (13) upon the worm (3).

11. Arrangement according to claim 9 or 10, characterized in that the spring force opposing the displacement is realized by one or more spring elements (15, 16), which act (13) upon the worm (3) in each case between an end face of its thread (5) and its immediately adjacent, rotatably supported end portion (14) and are supported relative to the housing wall (2) of the gear (1).

12. Arrangement according to claim 10 or 11, characterized in that one or more spring elements (15, 16) take the form of helical or cup springs (16), which are penetrated by the worm and are possibly combined to form jointly tensionable sets of springs.

13. Arrangement according to one of the preceding claims, characterized in that the top and base parts (2a, 2b) of the housing (2) may be placed one on top of the other and/or screwed to one another in the direction of the worm wheel axis (18) or parallel to the worm wheel axis (18).

14. Arrangement according to one of the preceding claims, characterized in that the common supporting surfaces (20) of the base and top parts (2a, 2b) of the housing (2) are penetrated by fixing means, in particular by screw means (21, 24).

15. Arrangement according to claim 14, characterized in that the fixing or screw means (21, 24) extend parallel to the worm wheel axis (18).

16. Arrangement according to one of the preceding claims, characterized in that the connecting projection (7) axially or paraxially penetrates the top and base parts (2a, 2b).

17. Arrangement according to one of the preceding claims, characterized in that the worm (3) is provided at either end with a combined radial and thrust bearing.

18. Arrangement according to one of the preceding claims, characterized in that the connecting projection (7) is used to receive and support the machine or plant part.

## Revendications

1. Dispositif pour entraîner en rotation un élément d'une machine ou d'une installation, par exemple une grue, comportant un engrenage à vis sans fin (1), dont le boîtier (2) est fixé au châssis ou à la fondation et dont la vis sans fin (3) peut être entraînée en rotation manuellement ou par un moteur d'entraînement et dont la roue tangente (4) est montée dans le boîtier (2) de manière à pouvoir tourner, cependant que la roue tangente (4) comporte des roulements séparés respectifs (10,11,12) sur les deux côtés (6a,6b) de sa denture (6) destinée à engrener avec la vis sans fin (3), caractérisé en ce que le boîtier (2) est constitué par une partie de base (2a) et une partie formant couvercle (2b) pouvant être fixée à plat sur la partie de base, qu'au moins une face frontale (6a,6b) ou une paroi latérale non dentée de la roue tangente (4) possède un embout de liaison (7), qui traverse la partie de base ou la partie formant couvercle et est agencé de manière à pouvoir être raccordé à l'élément devant être entraîné en rotation, et que les deux bagues extérieures (12) des roulements sont appliquées contre et/ou fixées sur la paroi respective de la partie de base et de la partie formant couvercle (2a,2b) du boîtier (2) et que les deux bagues intérieures associées (10) sont respectivement appliquées contre et/ou fixées à la paroi de la roue tangente (4).

2. Dispositif selon la revendication 1, caractérisé en ce que le tourillonnage de la roue tangente (4) est réalisé à l'aide de deux roulements obliques (figure 4), dans lesquels les corps de roulement (11) sont enserrés, par les inserts ou par la bague intérieure et la bague extérieure (10,12), respectivement au niveau d'une section périphérique comprise entre 60 et 120 degrés et de préférence égale à 90 degrés.

3. Dispositif selon l'une des revendications précédentes, caractérisé en ce que pour le tourillonnage de la roue tangente (4) il est prévu deux roulements (10,11, 12), dont les inserts ou les bagues intérieure et extérieure (10,12) sont fendus (19).

4. Dispositif selon l'une des revendications précédentes, caractérisé en ce que pour le tourillonnage de la roue tangente (4), il est prévu deux roulements (10,11, 12), dans lesquels la bague intérieure (10) possède un diamètre différent de celui de la bague extérieure (12) et notamment inférieur à celui de la bague extérieure (12).

5. Dispositif selon l'une des revendications précédentes, caractérisé en ce que la partie de base et/ou la partie formant couvercle du boîtier (2) de l'engrenage et/ou la roue tangente (4) comportent respectivement un évidement, dans lequel est insérée la bague extérieure (12).

6. Dispositif selon l'une des revendications précédentes, caractérisé par deux ou un plus grand nombre de vis sans fin pouvant être entraînées et qui engrènent avec la roue tangente commune.

7. Dispositif selon l'une des revendications précédentes, caractérisé par des roulements comportant plusieurs couronnes de corps de roulement, auxquelles sont associées de préférence des pistes de roulement, qui font entre elles un angle prédéterminé.

8. Dispositif selon la revendication 7, caractérisé en ce que les roulements sont réalisés avec plusieurs couronnes de corps de roulement sous la forme de paliers axiaux-radiaux doubles connus en soi.

9. Dispositif selon l'une des revendications précédentes, comportant une vis sans fin allongée (3) et une roue tangente (4) engrenant avec la vis sans fin, la vis sans fin et la roue tangente étant tourillonnées respectivement de manière à pouvoir tourner dans un boîtier (2) ou cadre commun de l'engrenage, caractérisé en ce que la vis sans fin (3) est en outre tourillonnée de manière à être déplaçable (17) dans sa direction longitudinale à l'encontre d'une force de ressort.

10. Dispositif selon la revendication 9, caractérisé en ce que la force de ressort, qui agit en sens opposé du déplacement (17), est produite par un ou plusieurs éléments de ressort (15,16), qui prennent appui sur la paroi (2) du boîtier et sont en prise (13) avec la vis sans fin (3).

11. Dispositif selon la revendication 9 ou 10, caractérisé en ce que la force de ressort, qui agit à l'encontre du déplacement, est produite par un ou plusieurs éléments de ressort (15,16), qui attaquent (13) la vis sans fin (3) entre une extrémité frontale de son filetage (5) et sa partie d'extrémité (14) respectivement la plus proche, montée de manière à pouvoir tourner, et prennent appui sur la paroi (2) du boîtier de l'engrenage (1).

12. Dispositif selon la revendication 10 ou 11, caractérisé en ce qu'un ou plusieurs éléments de ressort (15,16) sont agencés sous la forme de ressorts hélicoïdaux ou de ressorts Belleville (16), traversés par la vis sans fin et qui sont rassemblés éventuellement sous la forme d'un paquet de ressorts pouvant être serrés en commun.

13. Dispositif selon l'une des revendications précédentes, caractérisé en ce que la partie formant couvercle et la partie de base (2a,2b) du boîtier (2) peuvent être dégagées l'une de l'autre et/ou réunies par vissage, dans la direction de l'axe (18) de la roue tangente ou parallèlement à l'axe (18) de la roue tangente.

14. Dispositif selon l'une des revendications précédentes, caractérisé en ce que les surfaces d'application communes (20) de la partie de base et de la partie formant couvercle (2a,2b) du boîtier (2) sont traversées par des moyens de fixation, notamment des moyens de vissage (21,24).

15. Dispositif selon la revendication 14, caractérisé en ce que les moyens de fixation ou de vissage (21,24) s'étendent parallèlement à l'axe (18) de la roue tangente.

16. Dispositif selon l'une des revendications précédentes, caractérisé en ce que l'embout de liaison (7) traverse axialement ou parallèlement à l'axe la partie formant couvercle et la partie de base (2a,2b).

17. Dispositif selon l'une des revendications précédentes, caractérisé en ce que la vis sans fin (3) comporte, à chacune de ses deux extrémités, un palier axial et radial.

18. Dispositif selon l'une des revendications précédentes, caractérisé en ce que l'embout de liaison (7) est utilisé pour recevoir et porter l'élément de la machine ou l'élément de l'installation.
